# EUROPÄISCHE PATENTSCHRIFT

(11) **EP 2 689 066 B1**
(45) Veröffentlichungstag und Bekanntmachung des Hinweises auf die Patenterteilung: **28.01.2015**
(21) Anmeldenummer: 12724884.7
(22) Anmeldetag: 19.03.2012
(51) Int. Cl.: B23K 37/08, D21F 5/02, D21F 5/18

(54) **VERFAHREN ZUR HERSTELLUNG EINES YANKEEZYLINDERS**
METHOD FOR PRODUCING A YANKEE DRYER
PROCÉDÉ DE FABRICATION D'UN CYLINDRE YANKEE

(30) Priorität: 21.03.2011 AT 3962011; 05.09.2011 EP 11007162
(43) Veröffentlichungstag der Anmeldung: 29.01.2014
(73) Patentinhaber: Andritz AG, 8045 Graz (AT)
(72) Erfinder: KRASSER, Josef, A-8103 Rein (AT); MAIER, Markus, A-8301 Laßnitzhöhe (AT); KAHSIOVSKY, Ludwig, A-8044 Weinitzen (AT)
(74) Vertreter: Tschinder, Thomas
(86) Internationale Anmeldenummer: PCT/EP2012/001200
(87) Internationale Veröffentlichungsnummer: WO 2012/126603

(56) Entgegenhaltungen:
- US-A- 3 052 039
- US-A- 4 320 582
- US-A- 6 018 870

## Beschreibung

Den Gegenstand der Erfindung bildet ein Verfahren zur Fertigung eines Yankeezylinders aus Stahl.

Die Erfindung betrifft auch einen Yankeezylinder, der nach dem erfindungsgemäßen Fertigungsverfahren hergestellt worden ist.

Für die Herstellung von Papierbahnen oder Tissue ist es üblich, sogenannte Yankeezylinder im Trocknungsprozess einzusetzen.

Yankeezylinder haben meistens einen sehr großen Durchmesser. Sie werden von Innen her mit Dampf beheizt und sind schwer herstellbar, da hohe Anforderungen in Bezug auf die standzuhaltenden internen Drücke, die Dichtheit und die großen Durchmesser erfüllt werden müssen.

Handelsübliche Yankeezylinder weisen beispielsweise folgende Dimensionen auf:

| | |
|---|---|
| Zylinderdurchmesser: | 2000 mm bis 6500 mm |
| Hohlwellendurchmesser: | 1000 mm bis 2500 mm |
| Zylinderlänge: | 3000 mm bis 8500 mm |
| Zylindermasse: | 35 t bis 140 t |

Diese Zylinder werden überwiegend aus Gusseisen hergestellt, aus dem U.S. Patent US 4,196,689 und der WO 2008/105005 A1 sind aber auch bereits Yankeezylinder aus Stahl bekannt.

Die US 3,052,039 offenbart beispielsweise einen Yankeezylinder aus Stahl, bei dem der Zylindermantel aus einzelnen Mantelblechen zusammengeschweißt wird. Der fertige Zylindermantel wird dann nach dem Zusammenschweißen an seiner Innenseite und an seiner Außenseite einer mechanischen Bearbeitung unterzogen. Ebenso offenbart die US 6,018,870 einen Trocknungszylinder aus Stahl, der aus mehreren Segmenten zusammengesetzt ist. Hierbei handelt es sich jedoch nicht um einen Yankeezylinder sondern um einen Trockenzylinder, dessen Zylindermantel mit Dampfbohrungen durchsetzt ist.

Gewöhnlich besteht ein Yankeezylinder aus einer zylindrischen Mantelfläche, welche an den Enden mit Enddeckeln verschlossen wird. Die beiden Deckel können dabei mit dem Zylindermantel verschraubt oder auch verschweißt werden.

Ein Yankeezylinder wird über Zapfen drehbar gelagert und weist in seinem Inneren eine Hohlwelle oder Achse auf, durch die Dampf zur Beheizung in den Zylinder eingebracht wird bzw. Abdampf und Kondensat abgeführt werden kann.

Oft weist der Zylindermantel an seiner Innenfläche eine große Anzahl von Rillen auf, die den Wärmeübergang von der beheizten Zylinderinnenseite zur Zylinderoberfläche verbessern, ohne die Bauteilfestigkeit des Mantels gravierend zu schwächen.

Das herkömmliche Verfahren zur Herstellung eines geschweißten Yankee-Zylindermantels ist durch folgenden Fertigungsablauf gekennzeichnet:
1. Zuschnitt und Einrollen der Mantelbleche;
2. Verschweißen der Mantelbleche zum fertigen Zylindermantel;
3. mechanische Bearbeitung des gesamten Zylindermantels an der Außen- und Innenseite, sowie an den Stirnseiten;
4. Anbau der stirnseitigen Deckel durch Verschrauben oder Schweißen;

Da die Zylindermäntel eine Dimension von bis zu 6500 mm Durchmesser und 8500 mm Länge aufweisen, sind für die mechanische Bearbeitung des Zylindermantels sehr große und teure Werkzeugmaschinen erforderlich. Derart große Maschinen sind bei Maschinen- bzw. Anlagenbauern sehr selten vorhanden.

Unter mechanische Bearbeitung werden in der vorliegenden Erfindung Dreh- und Fräsbearbeitungsschritte verstanden.

Ziel der Erfindung ist es daher, ein kostengünstigeres Herstellverfahren für einen Yankeezylinder zu beschreiben, das alle Anforderungen bezüglich Qualität und Maßgenauigkeit erfüllt.

Das erfindungsgemäße Fertigungsverfahren des Zylindermantels aus Stahl umfasst dabei folgende Schritte:
a.) Zuschnitt und Einrollen der Mantelbleche;
b.) Verschweißen der Mantelbleche zu zwei oder mehreren Zylinderschüssen;
c.) mechanische Drehbearbeitung der einzelnen Zylinderschüsse an der Innenseite, sowie an den jeweiligen Stirnseiten;
d.) Verschweißen der einzelnen Zylinderschüsse zum vollständigen Zylindermantel.

Die Idee der Erfindung beruht also darauf, kürzere Zylinderschüsse einzeln herzustellen und diese dann zumindest an der Innenseite mechanisch zu bearbeiten. Während dieser Drehbearbeitung der Innenseite wird einerseits die Zylinderwand geglättet und andererseits auch eine exakte Zylinderform hergestellt. Erfindungsgemäß wird die Innenseite der Zylinderschüsse vor dem Verschweißen der Zylinderschüsse zu einem vollständigen Zylindermantel (Schritt d.)) im Wesentlichen fertig bearbeitet, sodass nur allenfalls eine kleine Nachbearbeitung der im Schritt d.) gebildeten innenliegenden Schweißnaht erfolgt. Diese Nachbearbeitung kann aber ebenfalls mit kleineren Bearbeitungsmaschinen erfolgen.

Vorzugsweise hat der Yankeezylinder im Inneren in Umfangsrichtung umlaufende Rillen. Diese Rillen werden dann erfindungsgemäß im Schritt c.) hergestellt.

Erst wenn die Drehbearbeitung der Yankeeinnenseite abgeschlossen ist, werden die einzelnen Schüsse zu einem vollständigen Yankeezylinder zusammengeschweißt. An der Yankeeinnenseite ist dann gegebenenfalls nur noch eine Nachbearbeitung der Schweißnaht erforderlich, dies kann mit relativ kleinen Maschinen erfolgen.

Durch das erfindungsgemäße Verfahren können nun auch sehr große Yankeezylinder mit einer Länge von beispielsweise über 6 Metern mit verhältnismäßig kleinen Drehbearbeitungsmaschinen hergestellt werden.

Somit ist durch die Drehbearbeitung der kürzeren Zylinderschüsse eine einfachere mechanische Bearbeitung möglich und überdies sind nicht so große (hohe) Bearbeitungsmaschinen erforderlich.

Es ist günstig, wenn vor dem Schritt d.) die einzelnen Zylinderschüsse auch an der Außenseite einer Drehbearbeitung unterzogen werden.

Vorzugsweise werden nach dem Schritt c.) und vor dem Schritt d.) die einzelnen Zylinderschüsse an der Innen- und Außenseite, sowie an den Stirnseiten mechanisch fertig bearbeitet.

Somit sind für die gesamte mechanische Bearbeitung des Zylindermantels, also für die Dreh- und Fräsbearbeitung keine großen Bearbeitungsmaschinen erforderlich. Der ganze Zylindermantel wird dann nach dem Verschweißen lediglich einer Schleifbearbeitung unterzogen. Bei der Schleifvorrichtung handelt es sich aber primär um eine Hilfskonstruktion, die einen weit weniger komplexen Aufbau als eine Drehbearbeitungsmaschine aufweist.

Es ist günstig, wenn das Verschweißen der einzelnen Zylinderschüsse gemäß Schritt d.) zumindest von einer Seite her durch einen mobilen Schweißroboter bzw. durch ein elektro-mechanisches Schweißfahrwerk, der oder das auf einer an den Zylinderschüssen angebrachten Hilfsschiene geführt ist, durchgeführt wird.

Unter einem mobilen Schweißroboter wird ein Schweißroboter verstanden, der leicht und mit geringem Aufwand an unterschiedliche Einsatzorte transportiert werden kann. Hierbei erweisen sich Engspaltschweißroboter bzw. elektro-mechanische Schweißfahrwerke als besonders nützlich. Somit kann beispielsweise beim Kunden der endgültige Zusammenbau des Yankeezylinders erfolgen, ohne dass der Kunde hierzu spezielle Bearbeitungs- oder Schweißmaschinen besitzen muss.

Bisher konnten einige Kunden nicht oder nur mit erheblichen Aufwand mit großen Yankeezylindern beliefert werden, da die Yankeezylinder durch Ihre Größe oder durch ihr Gewicht nicht und nur sehr schwierig an ihren Einsatzstandort gelangen konnten.

Das erfindungsgemäße Fertigungsverfahren ermöglicht es nun, dass auch diese Kunden leichter mit großen Yankeezylindern beliefert werden können. Dabei werden die Schritte a.) b.) c.) beim herkömmlichen Fertigungsstandort, beispielsweise einem Anlagenbauer, durchgeführt. Der Schritt d.) erfolgt aber dann vorzugsweise in der Nähe des endgültigen Einsatzstandortes des Yankeezylinders, also der Betriebsstätte des Yankees.

Idealerweise erfolgt das Verschweißen der Zylinderschüsse direkt am Werksgelände des Papiermaschinenbetreibers oder des Tissuemaschinenbetreibers.

Die einzelnen Zylinderschüsse, vorzugsweise mit bereits stirnseitig angebauten Deckeln, können einzeln viel leichter und günstiger zum Kunden transportiert werden, als fertig zusammengebaute Zylinder.

Vor Ort bzw. in der Nähe des Einsatzstandortes kann dann auch noch eine mechanische Fertigbearbeitung der einzelnen Zylinderschüsse an der Außenseite erfolgen, natürlich ist es günstiger, wenn bereits mechanisch vor- und fertigbearbeitete Zylinderschüsse vom Fertigungsstandort abtransportiert werden.

Damit die geometrische Form des Zylinders nicht durch Schweißverzüge bzw. Schrumpfungen verändert wird, muss ein geeignetes Schweißverfahren für das Zusammenfügen der einzelnen Zylinderschüsse zu einem ganzen Zylinder gewählt werden. Es hat sich als sehr günstig erwiesen, für das Verschweißen der Zylinderschüsse das Engspalt-Schweißverfahren zu benutzen. Es gewährleistet neben einer ausgezeichneten Schweißqualität auch geringe Schweißschrumpfungen.

Eine allfällige Gegenschweißung von der Gegenseite kann mit üblichen Schweißverfahren durchgeführt werden.

Es ist günstig, wenn die innenliegende Schweißnaht, also die Schweißnaht an der Zylinderinnenseite, mit dem Engspalt-Schweißverfahren gezogen wird, da diese Schweißnaht erheblich zur Stabilität des Yankeezylinders beiträgt. Das Engspalt-Schweißverfahren wird vorzugsweise durch einen Schweißroboter bzw. durch ein elektro-mechanisches Schweißfahrwerk ausgeführt. Die Schweißnaht an der Zylinderaußenseite kann dann von Hand gezogen werden.

Bei gerillten Zylindern kann die Schweißnaht dabei sowohl zwischen den Rillen des Zylinders wie auch in einer Rille des Zylinders liegen.

Die im Schritt d.) gebildete Schweißnaht kann dann gegebenenfalls nachbearbeitet werden, dies kann aber auch durch kleinere Bearbeitungsmaschinen erfolgen.

Der fertig zusammengeschweißte Yankeezylinder kann dann noch geschliffen, beschichtet und erneut geschliffen werden. Diese Schleifbearbeitung kann auch vor Ort mit Hilfe von kleineren Hilfskonstruktionen durchgeführt werden.

Im Folgenden wird die Erfindung anhand von Zeichnungen beschrieben.

Es zeigt:
Fig. 1 einen Yankeezylinder aus Stahl;
Fig. 2 den fertig zusammengeschweißten Zylindermantel;
Fig. 3a und Fig. 3b die mögliche Lage der Schweißnähte;
Fig. 4a, b, c unterschiedliche Ausführungen der Schweißnaht;

Gleiche Bezugszeichen in den einzelnen Figuren bezeichnen jeweils gleiche Bauteile.

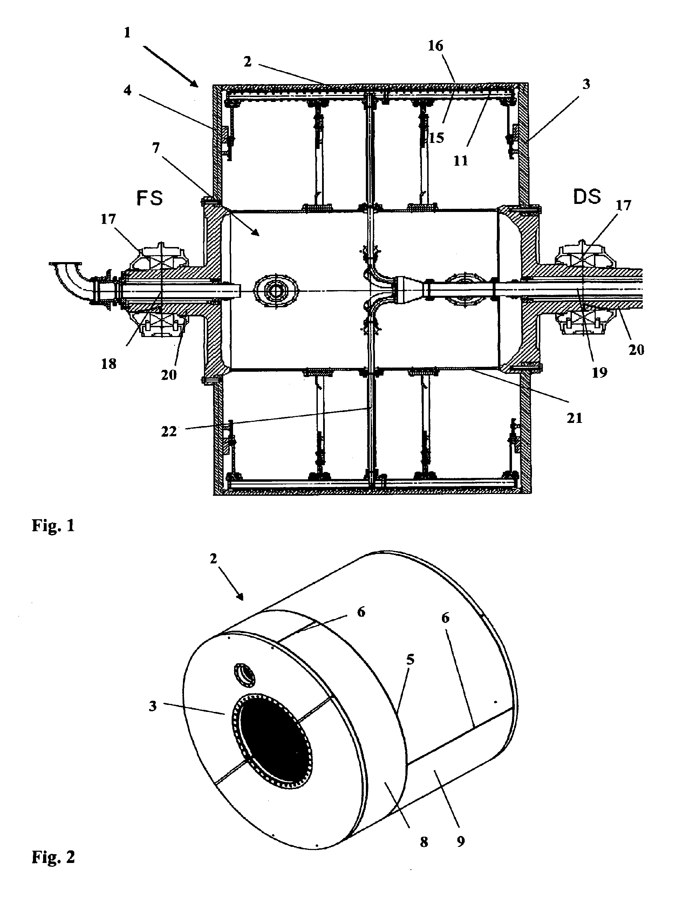

In Fig. 1 ist ein Yankeezylinder 1 dargestellt. Er besteht aus einem zylinderförmigen Stahlmantel 2, der mit den beiden Enddeckeln 3 und 4 verschweißt bzw. verschraubt ist.

Im Inneren des Yankeezylinders 1 befindet sich eine Zentralwelle 7 mit dem Zentralteil 21 und den beiden Lagerzapfen 20, die in den Lagern 17 drehbar gelagert sind.

Über die Dampfzufuhr 18 wird dem Yankeezylinder 1 im Betrieb Dampf zugeführt. Abdampf bzw. Kondensat wird über die Kondensatleitung 22 bzw. 19 aus dem Yankeezylinder abgeführt.

An der Zylinderinnenseite 15 befindet sich eine Vielzahl von Rillen 11, die in Umfangsrichtung des Yankeezylinders 1 verlaufen. Durch die Rillen 11 wird der Wärmeübergang zur Zylinderaußenseite 16 begünstigt und die Kondensatabfuhr über die Kondensatleitungen 22 erleichtert.

Bei den bisherigen Herstellungsverfahren nach dem Stand der Technik werden einzelne Mantelbleche zugeschnitten, eingerollt und zu Zylinderschüssen zusammengeschweißt. Danach erfolgt erst die mechanische Bearbeitung des gesamten Zylindermantels an der Außen- und Innenseite, sowie an den Stirnseiten. Schlussendlich werden die stirnseitigen Deckel durch Verschrauben oder Schweißen angebracht. Besonders für die Fertigung sehr großer Yankeezylinder mit einer Länge von über 5 Meter benötigt man für die mechanische Drehbearbeitung sehr große Maschinen.

Bei der vorliegenden Erfindung werden in einem ersten Schritt a.) einzelne Mantelbleche aus Stahl zugeschnitten und eingerollt und danach im zweiten Schritt b.) zu einzelnen Zylinderschüssen 8, 9, 10 zusammengeschweißt. Diese Zylinderschüsse 8, 9, 10 werden dann an der Innenseite 15, sowie an den Stirnseiten mechanisch bearbeitet. Diese mechanische Drehbearbeitung kann nun mit wesentlich kleineren Maschinen durchgeführt werden, die beispielsweise nicht mehr Bearbeitungshöhen von 6 m, sondern nur noch von 3 m bewältigen können. Idealerweise werden die einzelnen Zylinderschüsse 8, 9, 10 an ihrer Innenseite 15 komplett fertig bearbeitet. Erst danach werden diese vorzugsweise fertig bearbeiteten Zylinderschüsse 8, 9, 10 zu einem fertigen Zylindermantel 2 zusammengeschweißt.

Vor dem Zusammenschweißen der einzelnen Zylinderschüsse 8, 9, 10 können auch stirnseitig die beiden Enddeckel 3 und 4 angebaut werden.

In Fig. 2 ist beispielhaft ein zusammengebauter Zylindermantel 2 dargestellt. Man erkennt dabei die beiden Zylinderschüsse 8 und 9 und die beiden Schweißnähte 6, durch die die eingerollten Mantelbleche zu einem Zylinderschuss 8, 9, 10 zusammengefügt wurden. Ein Zylinderschuss 8, 9, 10 kann dabei aus mehreren einzelnen Mantelblechen zusammengefügt werden. In Fig. 2 ist auch die umlaufende Schweißnaht 5 dargestellt, die im Verfahrensschritt d.) erzeugt wird und die die beiden Zylinderschüsse 8 und 9 verbindet. Diese Schweißnaht 5 wurde erst gesetzt, nachdem die einzelnen Zylinderschüsse 8, 9 fertig bearbeitet waren.

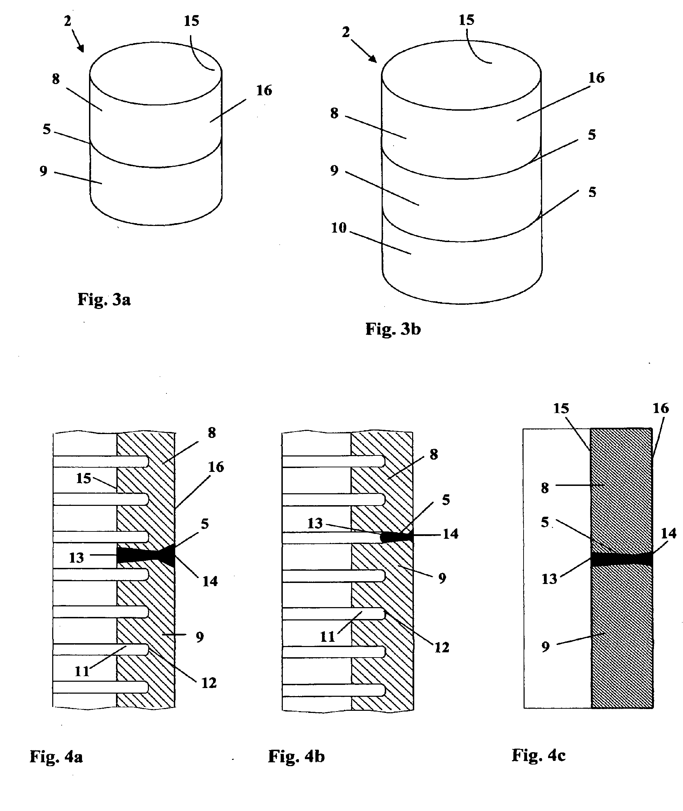

Der Zylindermantel 2 kann beispielsweise aus zwei einzelnen Zylinderschüssen 8, 9 aufgebaut werden, wie dies in den Fig. 2 und Fig. 3a dargestellt ist, er kann aber auch aus drei, wie in Fig. 3b dargestellt, oder aus mehreren einzelnen Zylinderschüssen 8, 9, 10 aufgebaut sein.

Zur Verschweißung der einzelnen Zylinderschüsse 8, 9, 10 untereinander eignet sich das sogenannte Engspalt-Schweißverfahren besonders gut. Das Engspalt-Schweißverfahren ist in Fachkreisen ein etabliertes Schweißverfahren, bei dem der Wärmeeintrag ins Material und somit auch der Wärmeverzug minimiert werden. Bei diesem Verfahren werden vorzugsweise mit dem WIG-Verfahren und mit einer pendelnden Elektrode bzw. mit einem Engspaltschwert Spalte in der Größenordnung von 2 mm - 20 mm verschweißt.

Dieses Verschweißen zumindest von der Innenseite 15 her kann durch einen mobilen Schweißroboter bzw. durch ein elektro-mechanisches Schweißfahrwerk, das auf einer an den Zylinderschüssen 8, 9, 10 angebrachten Hilfsschiene geführt ist, durchgeführt werden.

In den Figuren 4a bis 4c sind unterschiedliche Ausführungen der Schweißverbindung 5 zwischen den Zylinderschüssen 8 und 9 dargestellt.

Bei Druckbehältern, wie einem Yankeezylinder 1, wird in der Regel die Schweißverbindung 5 durch eine Innenschweißnaht 13 an der Zylinderinnenseite 15 und durch eine Außenschweißnaht 14 an der Zylinderaußenseite 16 realisiert.

Die Fig. 4a und Fig. 4b zeigen einen Zylindermantel 2 mit Rillen 11 an der Zylinderinnenseite 15. Die Innenschweißnaht 13 kann dabei zwischen zwei Rillen 11 angebracht werden, wie dies in Fig. 4a dargestellt ist, oder aber in einer Rille 11, also am Rillenboden 12. Eine derartige Innenschweißnaht 13 ist in Fig. 4b dargestellt. Fig. 4c zeigt eine Innenschweißnaht 13 und eine Außenschweißnaht 14 bei einem nicht gerillten Zylindermantel 2.

## Patentansprüche

1. Verfahren zur Fertigung eines Yankeezylinders (1) aus Stahl umfassend folgende Schritte:
a.) Zuschnitt und Einrollen von einzelnen Mantelblechen;
b.) Verschweißen der Mantelbleche zu zwei oder mehreren Zylinderschüssen (8, 9, 10);
c.) Drehbearbeitung der einzelnen Zylinderschüsse (8, 9, 10) an der Innenseite (15, 16), sowie an den Stirnseiten;
d.) Verschweißen der Zylinderschüsse (8, 9, 10) zu einem vollständigen Zylindermantel (2) des Yankeezylinders (1),
wobei die Innenseite (15) der Zylinderschüsse (8, 9, 10) vor dem Verschweißen der Zylinderschüsse (8, 9, 10) zu einem vollständigen Zylindermantel (2) im Wesentlichen fertig bearbeitet wird und dass nur allenfalls eine Nachbearbeitung der im Schritt d.) gebildeten innenliegenden Schweißnaht (13) erfolgt.

2. Verfahren nach Anspruch 1, **dadurch gekennzeichnet, dass** durch die Drehbearbeitung im Schritt c.) an der Innenseite (15) der Zylinderschüsse (8, 9, 10) umlaufende Rillen (11) gefertigt werden.

3. Verfahren nach einem der Ansprüche 1 bis 2, **dadurch gekennzeichnet, dass** vor dem Schritt d.) die einzelnen Zylinderschüsse (8, 9, 10) auch an der Außenseite (16) einer Drehbearbeitung unterzogen werden.

4. Verfahren nach einem der Ansprüche 1 bis 3, **dadurch gekennzeichnet, dass** das Verschweißen der Zylinderschüsse (8, 9, 10) gemäß Schritt d.) zumindest von einer Seite her durch einen mobilen Schweißroboter bzw. durch ein elektro-mechanisches Schweißfahrwerk, das auf einer an den Zylinderschüssen (8, 9, 10) angebrachten Hilfsschiene geführt ist, durchgeführt wird.

5. Verfahren nach einem der Ansprüche 1 bis 4, **dadurch gekennzeichnet, dass** nach dem Schritt c.) und vor dem Schritt d.) die stirnseitigen Deckel (3, 4) an die entsprechenden Zylinderschüsse (8, 9, 10) angebaut werden.

6. Verfahren nach einem der Ansprüche 1 bis 5, **dadurch gekennzeichnet, dass** die einzelnen Zylinderschüsse (8, 9, 10) zumindest von einer Seite her über ein Engspalt-Schweißverfahren zusammengeschweißt werden.

7. Verfahren nach einem der Ansprüche 1 bis 6, **dadurch gekennzeichnet, dass** die einzelnen Zylinderschüsse (8, 9, 10) an der Innenseite (15) umlaufende Rillen (11) aufweisen und dass die Verschweißung der Zylinderschüsse (8, 9, 10) am Rillenboden (12) erfolgt.

8. Verfahren nach einem der Ansprüche 1 bis 7, **dadurch gekennzeichnet, dass** die Schritte a.), b.) und c.) an einem bestimmten Fertigungsstandort durchgeführt werden und dass der Schritt d.) nicht an diesem Fertigungsstandort durchgeführt wird.

9. Verfahren nach Anspruch 8, **dadurch gekennzeichnet, dass** der Schritt d.) in der Nähe eines Einsatzstandortes für den Yankeezylinder (1), vorzugsweise am Werksgelände eines Papiermaschinen- oder Tissuemaschinenbetreibers, durchgeführt wird.

10. Verfahren nach Anspruch 9, **dadurch gekennzeichnet, dass** die mechanisch drehbearbeiteten Zylinderschüsse (8, 9, 10) einzeln vom Fertigungsstandort in die Nähe des Einsatzortes geliefert werden.

11. Verfahren nach einem der Ansprüche 1 bis 10, **dadurch gekennzeichnet, dass** die im Schritt d.) gebildete Schweißnaht (5) nachbearbeitet wird.

12. Verfahren nach einem der Ansprüche 1 bis 11, **dadurch gekennzeichnet, dass** der fertig zusammengeschweißte Zylindermantel (2) des Yankeezylinders (1) beschichtet und geschliffen wird.

## Claims

1. Process for manufacturing a steel Yankee cylinder (1), comprising the following steps:
a.) Cutting and curling the individual shell plates;
b.) Welding the shell plates together to form two or more cylinder sections (8, 9, 10);
c.) Mechanical lathing of the individual cylinder sections (8, 9, 10) on the inside (15, 16), and on the face ends;
d.) Welding the individual cylinder sections (8, 9, 10) together to form a complete cylinder shell (2) of the Yankee cylinder (1),
where the inside (15) of the cylinder sections (8, 9, 10) is largely finish machined before the cylinder sections (8, 9, 10) are welded together to form a complete cylinder shell (2) and only the inner weld seam (13) formed in step d.) is re-machined if need be.

2. Process according to Claim 1, **characterized by** grooves (11) running in circumferential direction being made on the inside (15) of the cylinder sections (8, 9, 10) as a result of the mechanical lathing work in step c).

3. Process according to one of Claims 1 to 2, **characterized by** the individual cylinder sections (8, 9, 10) also being lathed on the outer side (16) before step d.).

4. Process according to one of Claims 1 to 3, **characterized by** the cylinder sections (8, 9, 10) being welded according to step d.), at least from one side, by a mobile welding robot or an electro-mechanical welding carriage that runs on an auxiliary rail mounted on the cylinder sections (8, 9, 10).

5. Process according to one of Claims 1 to 4, **characterized by** the end face covers (3, 4) being mounted on the corresponding cylinder sections (8, 9, 10) after step c.) and before step d.).

6. Process according to one of Claims 1 to 5, **characterized by** the individual cylinder sections (8, 9, 10) being welded together, at least from one side, by means of narrow gap welding.

7. Process according to one of Claims 1 to 6, **characterized by** the individual cylinder sections (8, 9, 10) having grooves (11) running in circumferential direction on the inside (15) and by the cylinder sections (8, 9, 10) being welded in the floor (12) of the groove.

8. Process according to one of Claims 1 to 7, **characterized by** steps a.), b.), and c.) being conducted at a specific manufacturing location, and by step d.) not being carried out at this manufacturing location.

9. Process according to Claim 8, **characterized by** step d.) being carried out in the vicinity of the final location for the Yankee cylinder (1), preferably on the works premises of a paper or tissue machine operator.

10. Process according to Claim 9, **characterized by** the mechanically lathed cylinder sections (8, 9, 10) being delivered individually from the manufacturing location to the vicinity of the final location.

11. Process according to one of Claims 1 to 10, **characterized by** the weld (5) formed in step d.) being re-machined.

12. Process according to one of Claims 1 to 11, **characterized by** the fully assembled cylinder shell (2) of the Yankee cylinder (1) being coated and ground.

## Revendications

1. Procédé de fabrication d'un sécheur Yankee (1) en acier, comportant les étapes suivantes:
a.) découpage et enroulement de viroles individuelles de la chemise;
b.) assemblage des viroles de chemise par soudage pour former deux ou plusieurs tronçons de cylindre (8, 9, 10);
c.) tournage mécanique des surfaces intérieures (15,16) et des surfaces de front des tronçons de cylindre (8, 9, 10);
d.) assemblage des tronçons de cylindre (8, 9,10) par soudage pour former une chemise de cylindre (2) complète pour le sécheur Yankee (1),
où la surface intérieure (15) des tronçons de cylindre (8, 9,10) est dans l'essentiel soumise à un usinage de finition avant l'assemblage des tronçons de cylindre (8, 9,10) par soudage, pour former une chemise de cylindre (2) complète et un usinage d'ébauchage de la soudure intérieure (13) formée pendant l'étape d.), ne s'effectue que le cas échéant.

2. Procédé selon la revendication 1, **caractérisé en ce qu'**à cause du tournage mécanique effectué à l'étape c.), des rainures (11) s'étendant dans le sens circonférentiel sont appliquées sur la surface intérieure (15) des tronçons de cylindre (8, 9, 10).

3. Procédé selon l'une des revendications 1 à 2, **caractérisé en ce que** la surface extérieure (16) des tronçons de cylindre (8, 9, 10) individuels est aussi soumise à un tournage avant l'étape d.).

4. Procédé selon l'une des revendications 1 à 3, **caractérisé en ce que** l'assemblage des tronçons de cylindre (8, 9, 10) selon l'étape d.) se trouve exécutée, au moins d'un côté, par un robot de soudage mobile, respectivement un châssis électromécanique de soudage, mené sur un rail auxiliaire monté sur les tronçons de cylindre (8, 9, 10).

5. Procédé selon l'une des revendications 1 à 4, **caractérisé en ce qu'**après l'étape c.) et avant l'étape d.), les couvercles d'embout (3, 4) sont joints aux tronçons de cylindre (8, 9, 10) appropriés.

6. Procédé selon l'une des revendications 1 à 5, **caractérisé en ce que** les tronçons de cylindre (8, 9, 10) individuels sont joints, au moins d'un côté, à l'aide d'un procédé de soudage de chanfrein étroit.

7. Procédé selon l'une des revendications. 1 à 6, **caractérisé en ce que** les tronçons de cylindre (8, 9, 10) individuels comportent, sur leurs surfaces intérieures (15), des rainures (11) s'étendant dans le sens circonférentiel et que l'assemblage des tronçons de cylindre (8, 9, 10) par soudage s'exécute au fond (12) des rainures.

8. Procédé selon l'une des revendications 1 à 7, **caractérisé en ce que** les étapes a.), b.) et c.) sont exécutées à un certain emplacement de fabrication et que l'étape d.) ne s'exécute pas à cet emplacement de fabrication.

9. Procédé selon la revendication 8, **caractérisé en ce que** l'étape d.) se trouve exécutée près d'un emplacement d'utilisation du sécheur Yankee (1), de préférence dans l'enceinte d'une entité exploitante d'une machine à papier ou machine à papier en ouate.

10. Procédé selon la revendication 9, **caractérisé en ce que** les tronçons de cylindre (8, 9, 10) qui ont été soumis à un tournage mécanique sont transportés individuellement à partir de l'emplacement de fabrication dans la proximité de l'emplacement d'utilisation.

11. Procédé selon l'une des revendications 1 à 10, **caractérisé en ce que** la soudure (5) formée à l'étape d.) est soumise à un usinage d'ébauchage.

12. Procédé selon l'une des revendications 1 à 11, **caractérisé en ce que** la chemise de cylindre (2) du sécheur Yankee (1), après avoir été complètement jointe par soudage, est revêtue et affûtée.
